(19) **Europäisches Patentamt European Patent Office Office européen des brevets**

(11) **EP 1 922 207 B1**

(12) **EUROPEAN PATENT SPECIFICATION**

(45) Date of publication and mention of the grant of the patent:
**21.10.2009 Bulletin 2009/43**

(51) Int Cl.:
**B29C 63/16** *(2006.01)* **B30B 5/02** *(2006.01)*
**B29D 11/00** *(2006.01)*

(21) Application number: **06764321.3**

(22) Date of filing: **10.08.2006**

(86) International application number:
**PCT/EP2006/065235**

(87) International publication number:
**WO 2007/020236 (22.02.2007 Gazette 2007/08)**

(54) **INFLATABLE MEMBRANE PRESSING APPARATUS FOR A FILM OR COATING APPLICATION OR LAMINATION PROCESS**

VORRICHTUNG ZUM PRESSEN EINER AUFBLASBAREN MEMBRAN FÜR DAS AUFBRINGEN EINES FILMS ODER EINER BESCHICHTUNG ODER EINEN LAMINIERUNGSPROZESS

APPAREIL DE PRESSAGE À MEMBRANE GONFLABLE POUR PROCESSUS DE LAMINATION OU D'APPLICATION DE FILM OU DE REVÊTEMENT

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.08.2005 US 203870**

(43) Date of publication of application:
**21.05.2008 Bulletin 2008/21**

(73) Proprietor: **ESSILOR INTERNATIONAL (Compagnie Générale d'Optique) F-94220 Charenton-le-Pont (FR)**

(72) Inventors:
• **JIANG, Peiqi**
  **St Petersburg, FL 33709 (US)**
• **REED, Jimmy**
  **St Petersburg, FL 33709 (US)**

(74) Representative: **Catherine, Alain et al**
  **Cabinet Harlé & Phélip**
  **7 rue de Madrid**
  **75008 Paris (FR)**

(56) References cited:
**EP-A2- 1 426 168**     **WO-A-97/35216**
**WO-A-03/011552**     **DE-A1- 3 532 710**
**DE-A1- 19 858 849**

**Description**

**BACKGROUND OF THE INVENTION**

**1. Field of the invention**

The present invention relates to an inflatable membrane pressing apparatus for a film or coating application or lamination process, in particular for applying films or coatings on an article, for example, an ophthalmic lens.

**2. Description of related art**

It is a common practice in the art to coat at least one main surface of an optical article, such as an ophthalmic lens or lens blank, with one or several coatings for imparting to the finished or semi-finished optical article additional or improved optical and/or mechanical properties.

Thus, it is usual practice to coat at least one main surface of an optical article, typically made of an organic glass material, with successively, starting from the surface of the optical article, an impact-resistant coating (impact resistant primer), an abrasion- and/or scratch-resistant coating (hard coat), an anti-reflecting coating and, optionally, an hydrophobic and/or oleophobic top coat (top coat). Other coatings such as a polarizing coating, a photochromic or a coloured coating may also be applied onto one or both surfaces of the optical article.

Numerous processes and methods have been proposed for coating a surface of an optical article and are disclosed, e.g. in DE-A-3 532 710.

U.S. Pat. No. 6,562,466 describes one process or method for transferring a coating from at least one mold part onto at least a geometrically defined surface of a lens blank which comprises:

- Providing a lens blank having at least one geometrically defined surface;
- Providing a carrier or mold part having an internal surface bearing a coating and an external surface;
- Depositing on said geometrically defined surface of said lens blank or on said coating a pre-measured amount of a curable adhesive composition;
- Moving relatively to each other the lens blank and the support to either bring the coating into contact with the curable adhesive composition or bring the curable adhesive composition into contact with the geometrically defined surface of the lens blank;
- Applying a sufficient pressure onto the external surface of the carrier;
- Curing the layer of adhesive composition; and
- Recovering the lens blank with the coating adhered onto the geometrically defined surface of the lens blank.

The pressure exerted against the external surface of the carrier can result from inflation of an inflatable membrane.

An inflatable membrane apparatus for use in such a coating transfer process is disclosed in patent application EP 1 426 168.

Such an inflatable membrane pressing apparatus comprises a fluid accumulator, for example an air accumulator, provided with a fluid port connected to a pressurized fluid source for introducing pressurized fluid in the accumulator and also evacuating the pressurized fluid from the accumulator. The upper face of the accumulator may comprise an UV transparent portion whereas the lower face of the accumulator comprises an inflatable membrane which may also be, at least partly, UV transparent. A trunconical guiding means for laterally guiding the inflatable membrane during inflation projects outwardly from the lower face of the accumulator.

Although such prior art apparatus achieves a globally good transfer of the coating by UV cure process, improvements are still desirable regarding keeping the exact pressing shape of the inflatable membrane on the carrier and the article surface during the entire process and in particular during a long curing and/or heating cycle. In particular, this is very important when a thermal process is used in order to avoid the presence of no-transfer spots at the periphery of the article. It is also very important if the adhesive used in the process is a pressure sensitive adhesive or a hot-melt adhesive.

**SUMMARY OF THE INVENTION**

Thus, the aim of the invention is to provide an inflatable membrane pressing apparatus for use in a film or coating application or lamination process which remedies to the drawbacks of the inflatable membrane apparatuses of the prior art and in particular which allows a better transfer of the film or coating, and in particular avoids apparition of no-transfer spots near the periphery of the article, such as an optical article.

A further object of the invention is to provide such an inflatable membrane pressing apparatus which allows the use of different supporting means for supporting and centering of the article within the apparatus ;

A still further object of the invention is to provide such an inflatable membrane pressing apparatus which can be of a small overall size and therefore easily transportable to be placed in either UV or air oven.

According to the invention there is provided an inflatable membrane pressing apparatus for a film or coating application or lamination process which comprises:

- a supporting means for supporting an article ;
- an inflatable membrane device comprising a pressurized fluid accumulator a face of which is partly formed by an inflatable membrane ;
- a holding frame for holding the supporting means and the inflatable membrane device in a spaced apart relationship with the inflatable membrane facing the supporting means ; and
- a pressurized fluid admission/release means for introducing and releasing pressurized fluid in and from the fluid accumulator to inflate and deflate the membrane, wherein the pressurized fluid admission/release means comprises a pressure relief valve for controlling the pressure of the fluid within the accumulator.

In one embodiment, the pressurized fluid admission/release means is mounted on a removable cover of the accumulator and is in fluid communication with the accumulator by means of a passage provided in the cover.

In another embodiment, the pressurized fluid admission/release means is mounted on a side wall of the accumulator and is in fluid communication with the accumulator by means of a passage provided in the side wall.

In a preferred embodiment the supporting means are slidably mounted on the holding frame.

The supporting means can also be an additional inflatable membrane device.

In still a preferred embodiment the inflatable membrane device comprises a membrane guiding means, typically a trunconical guiding means.

The invention also concerns a process for applying a film or a coating onto a surface of an article using the inflatable membrane pressing apparatus as disclosed above, which comprises:

- Placing an article in the supporting means with its surface to be coated facing upwardly ;
- Depositing an amount of a curable glue or a coating solution on the surface to be coated of the article ;
- Placing a film or a coating born by a flexible carrier on the curable glue or on the coating solution ;
- Introducing the supporting means bearing the article and the film or coating born by the flexible carrier in the apparatus ;
- Inflating the inflatable membrane up to a set maximum value of pressure ;
- Heating and/or curing the curable glue or coating solution while maintaining the inflatable membrane pressure to the set maximum value; and
- Recovering the article with its surface coated with the film or the coating.

The invention further concerns a process for applying a film or a coating born by a flexible carrier and comprising an outermost layer of a dry latex onto a surface of an article using the inflatable membrane pressing apparatus as disclosed above, which comprises:

- Placing an article in the supporting means with its surface to be coated facing upwardly ;
- Depositing an amount of water or of an aqueous solvent on the surface to be coated of the article or the outermost dry latex layer ;
- Placing the film or the flexible carrier with the outermost layer on the surface to be coated of the article ;
- Introducing the supporting means, bearing the article and the film or the flexible carrier in the apparatus ;
- Inflating the inflatable membrane up to a set maximum value of pressure;
- Heating and/or curing the latex layer while maintaining the inflatable membrane pressure to the set maximum value; and
- Recovering the article with its surface coated with the coating or the film

Preferably, the process comprises a cooling step, typically up to ambient temperature, before the step of recovering the coated article.

**BRIEF DESCRIPTION OF THE DRAWINGS**

The foregoing and other objects, features and advantages of the present invention will become readily apparent to those skilled in the art from a reading of the detailed description when considered in conjunction with the accompanying drawings wherein:

- Figure 1 is a perspective view of a first embodiment of an inflatable membrane pressing apparatus according to the invention;
- Figure 2 is a schematic cross-sectional view of the inflatable membrane pressing apparatus of figure 1 ;
- Figure 3, is a perspective view of a second embodiment of an inflatable membrane pressing apparatus according to the invention in which the supporting means is an additional inflatable membrane device ;
- Figure 4, is a perspective view of the inflatable membrane pressing apparatus of Figure 3 ;
- Figure 5, is a schematic cross-sectional view of the inflatable membrane pressing apparatus of figure 3 ;
- Figures 6A to 6C the main steps of a transfer coating process using the inflatable membrane pressing apparatus of the invention ;
- Figure 7 are photographs of optical lenses coated using the apparatus of the invention (example 5) and a similar apparatus but with no relief valve (comparative example).

## DETAILED DESCRIPTION OF THE INVENTION AND PREFERRED EMBODIMENTS

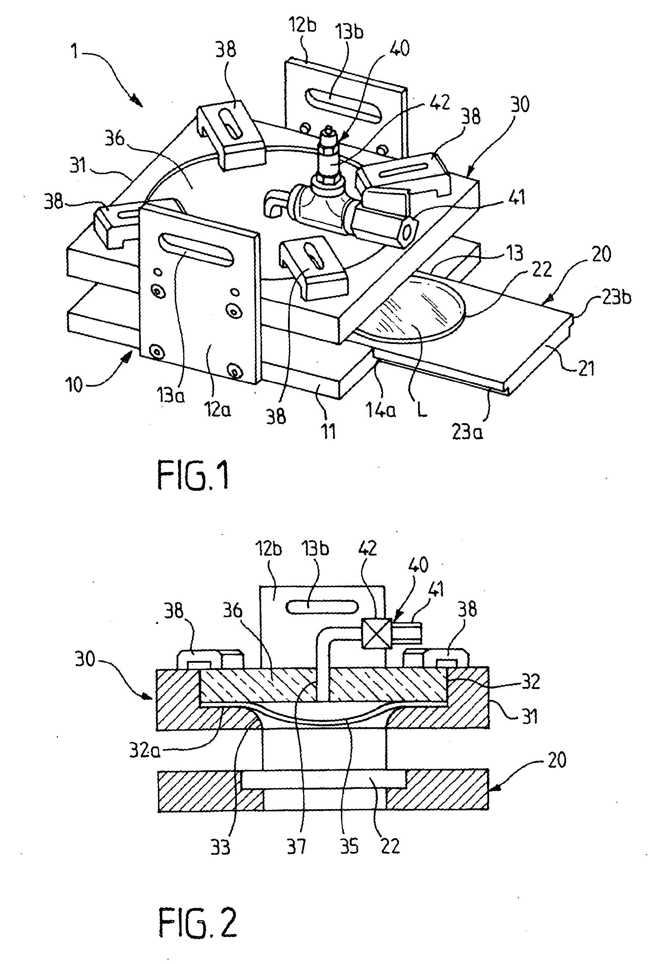

Referring to Figure 1, there is represented in perspective an embodiment of an inflatable membrane pressing apparatus 1 according to the invention. The pressing apparatus 1 comprises a holding frame 10, supporting means 20, an inflatable membrane device 30 and a pressurized fluid admission/release means 40.

The holding frame 10 comprises a horizontal base plate 11, typically of a square parallelepipedic shape, and two, parallel, upright standing flanges 12a, 12b.

Each flange 12a, 12b is fixed at its lower end, for example by means of screws, to a lateral side of the base plate 11, these lateral sides of the base plate 11 being opposite sides thereof. Flanges 12a, 12b are also provided at their upper ends with horizontal elongated apertures 13a, 13b for allowing easy transportation of the pressing apparatus 1.

For sake of clarity, in the following description and claims the direction parallel to the flanges 12a, 12b will be designated as the longitudinal direction and conversely the direction orthogonal to the flanges 12a, 12b will be designated as the transversal direction.

The base plate 11 comprises a central longitudinal recess 13 of rectangular shape for slidably accommodating the supporting means 20.

Supporting means 20 are comprised of a rectangular plate 21 sized to be accommodated within longitudinal recess 13 of base plate 11. Rectangular plate 21 is provided with a central circular aperture 22 for receiving an optical article such as ophthalmic lens L.

The longitudinal sides of rectangular plate 21 are provided with slides 23a, 23b which cooperate with sliding guides formed on the longitudinal sides of rectangular recess 13, only one sliding guide 14a, being visible in figure 1.

The inflatable membrane device 30, which is of general same square parallelepipedic shape and size than base plate 11, is fixed to flanges 13a, 13b by its opposite longitudinal sides, for example by means of screws, in a spaced apart relationship above base plate 11, parallel to base plate 11, and with inflatable membrane 35 (figure 2) facing base plate 11.

As shown in schematic cross-sectional view of figure 2 the inflatable membrane device 30 comprises a body 31 with a central cylindrical upper cavity 32 opening in the upper face of the body 31 and whose bottom surface is defined by an annular rim 32a. Upper cavity 32, at its bottom surface communicates with a central trunconical aperture 33 which opens in the lower face of body 31 and as will be explained below acts as a guiding means for the inflatable membrane 35.

The inflatable membrane 35, of circular shape, rests at its periphery on annular rim 32a and covers central trunconical aperture 33.

A circular removable cover 36 is placed above the inflatable membrane 35 in cylindrical upper cavity 32 and is firmly maintained in position by means of latching means 38, such as pivoting or retractable cleats.

Thus, inflatable membrane 35 is pinched at its periphery between annular rim 32a and removable cover 36.

Such an assembly allows easy replacement of the inflatable membrane 35 and easy change of the distance between the article and the inflatable membrane.

Removable cover 36 is provided with a passage 37 for admission/release of a pressurized fluid such as pressurized air behind the inflatable membrane 35.

Body 31, inflatable membrane 35 and removable cover 36 constitute what is called a fluid accumulator.

Passage 37, as shown in figure 2, opens at top and bottom surfaces of cover 36.

Passage 37, is connected to a pressurized fluid admission/release means 40 which comprises in flow communication a pressure relief valve 42 and, upstream of the pressure relief valve 42 with regard to a pressurized fluid source, a fluid in/out valve 41 that is removably connectable to the source of pressurized fluid, for example pressurized air, not shown in the drawings.

The trunconical aperture 33 typically has a height of 10 to 50mm, preferably 10 to 25mm and an outwardly oriented taper of 10° to 90°, preferably 30° to 50°.

The cover 36 and the inflatable membrane 35 can be made, at least partly, in a light transparent material, for example a UV transparent material, in order to allow light curing during the film or coating application or lamination process.

Of course, for thermal curing non-light transmitting materials such as opaque plastic materials, metals and alloys can be used.

The inflatable membrane 35 can be made of any elastomeric material which can be sufficiently deformed by pressurization with an appropriate fluid. Typically, the inflatable membrane has a thickness ranging from 0.50 mm to 5.0 mm and an elongation of 100 to 800%, and a durometer 10 to 100 shore A.

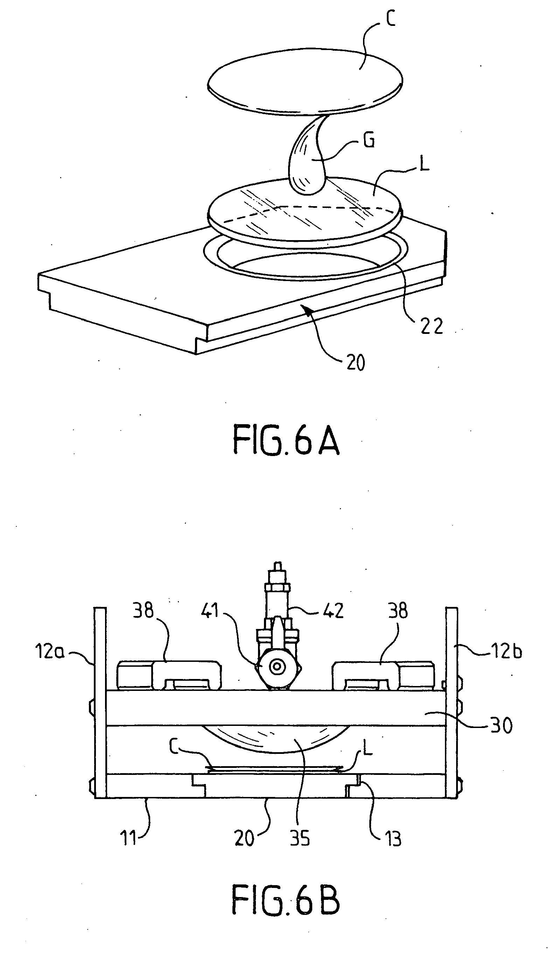

As a matter of example, a coating transfer process onto a surface of an ophthalmic lens using the above disclosed inflatable membrane pressing apparatus is below described in connection with figures 6A to 6C.

As shown in figure 6A, an optical article L such as an ophthalmic lens is positioned within receiving aperture 22 of supporting means 20 with its surface to be coated facing upwardly. Depending upon the nature of the outermost layer of the coating born by flexible carrier C, a requisite amount of an UV curable glue, a thermal curable glue, a coating solution, a deionised water or an aqueous solvent (in the case the outermost layer is a moisture activable dry latex layer) is deposited on the surface to be coated of the optical article L. The flexible carrier C is then placed on the optical article L with its coated surface facing the optical article L.

Supporting means 20 with the optical article L and the flexible carrier C in place is mounted in holding frame 10 by slidably engaging supporting means 20 within longitudinal recess 13 of base plate 11 (figure 6B).

Fluid in/out valve 41 is then connected to a pressurized air source (not shown) and is opened to introduce pressurized air and to inflate the inflatable membrane 35. When a predetermined maximum final pressure is reached, fluid in/out valve 41 is closed.

The fluid pressure of the inflated membranes 35 typically ranges from 5 to 50 PSI (0.35 to 3.5 kgf/cm$^2$) and more specifically from 0.3 to 3kgf/cm$^2$. Most preferred range is 5 to 20 PSI (0.35 to 1.40 kgf/cm$^2$). The flexible carrier is generally a thin supporting element made of a plastic material, especially a thermoplastic material and in particular of polycarbonate. Typically, the flexible carrier has a thickness ranging from 0.2 to 5 mm, preferably from 0.5 to 2 mm.

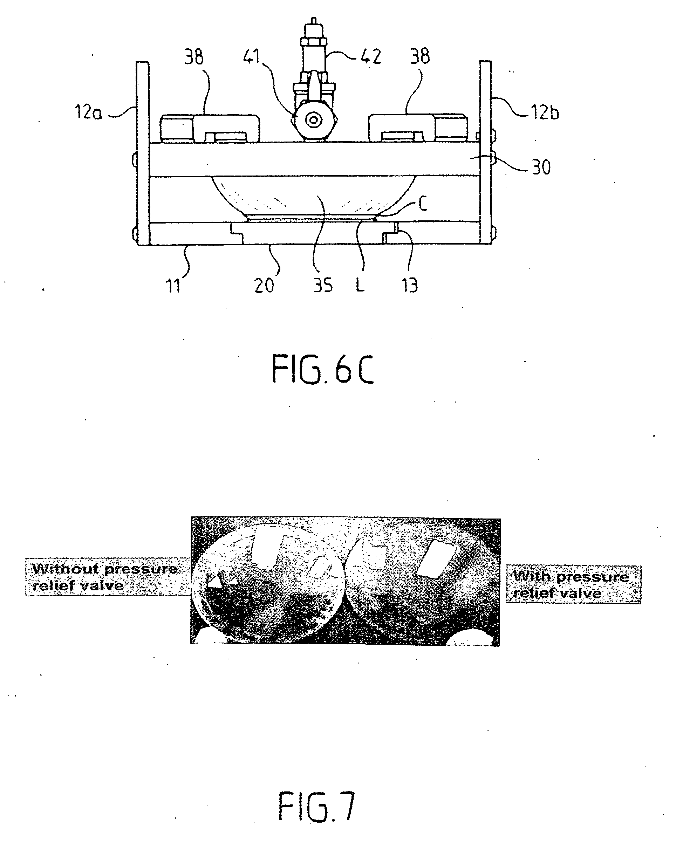

Inflation of the inflatable membrane 35 causes the flexible carrier C to match the geometry of the contacted surface of the optical article L. (Figure 6C).

Fluid in/out valve is then disconnected from the source while still closed and the entire assembly may be transported to a curing device, UV curing device or oven for thermal curing, where curing of the adhesive layer is achieved.

At the end of the curing step, the entire assembly is withdrawn from the curing device, the fluid in/out valve 41 is opened to deflate inflatable membrane 35, supporting means 20 is disengaged from base plate 11, flexible carrier C is removed and an optical article L with a coated surface is recovered.

During the entire process, and in particular during the curing step, due to heat, the final maximum pressure may tend to increase. Thanks to the pressure relief valve 42, the maximum final pressure in the accumulator is maintained constant to the set maximum pressure. The shape of the inflated membrane is also maintained constant. The film or coating can thus be maintained at the exact pressing shape of the article during the heating/curing step. A better transfer of the film or coating is therefore allowed, and in particular the presence of no-transfer spots, especially at the periphery of the optical article is avoided.

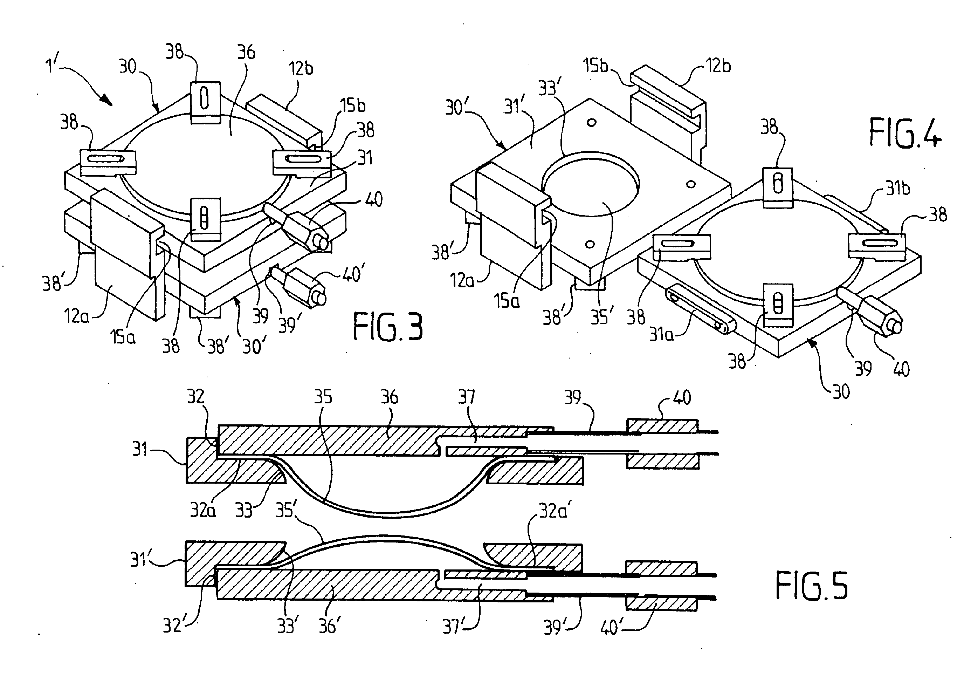

Figures 3 to 5 are perspective and cross-sectional schematic views of another embodiment of the inflatable membrane pressing apparatus 1' of the present invention.

The general construction of this other embodiment is similar to the pressing apparatus of figures 1 and 2 with the following differences:

- base plate 11 and supporting means 20 have been replaced by an additional inflatable membrane device 30', mounted on flanges 12a, 12b with its inflatable membrane 35' facing upwardly. The trunconical guiding means 33' in that case also serves as a receiving and centering means for the optical article. This additional inflatable membrane device is similar to the previous disclosed inflatable device 30 with the exception of the modifications indicated below. Parts of this additional inflatable membrane device 30' similar to those of the previously disclosed device 30 are referenced with the same number affected by a prime sign.
- The upper inflatable membrane device 30 is removably mounted in flanges 12a, 12b by means of grooves 15a, 15b provided in the flanges and cooperating slides 31a, 31b provided on opposite longitudinal sides of body 31.
- Passages 37, 37' for admission/release of a pressurized fluid open in lateral surface of covers 36 and 36' instead of top surfaces thereof.
- Grooves 39 and 39' are provided in bodies 31 and 31' to accommodate connections of passages 37, 37' to fluid admission/release means 40, 40' which are as disclosed above and in particular include a pressure relief valve (not shown).

This latter embodiment of the inflatable membrane pressing apparatus functions as previously described, except that the additional inflatable membrane 36' is inflated simultaneously with the inflatable membrane 36 and with preferably the same final pressure.

Thanks to the presence of the pressure relief valves, pressures applied to the membranes 35, 35' can be maintained constant throughout the process.

Of course, it should be understood that in the latter embodiment the upper inflatable membrane device 36 may be fixed whereas the lower inflatable membrane 36' may be removable.

The inflatable membrane pressing apparatus of the invention can be used for both thermal (air oven, infra-red, microwave) and UV curing cycles.

The apparatus overall size may be small rendering the apparatus easily transportable to be placed either in UV or air oven or conveyer oven.

The apparatus can be design so that its overall size is just a little larger than the article to be coated. For an optical lens of 70mm diameter, the apparatus can be as small as 18cmx18cmx15cm. Thanks to such a small apparatus, the coating process can be more effective by using a conveyer system or placing more apparatuses in one batch. Depending on the size of the article, the funnel diameter size (trunconical part) can be from 40mm to 120mm. The distance between the supporting means and the membrane can be from 10mm to 50mm.

The coating to be transferred may be a single coating or a stack of coating layers.

Usual functional coatings, as is well known, comprise hydrophobic/oleophobic top coats, anti-reflecting coatings, anti-abrasion and/or scratch-resistant coatings, impact-resistant coatings, polarized coatings, photochromic coatings, dyed coatings, optical-electronical coatings, electric-photochromic coatings, printed layers and wave front coating layer.

Preferably, the coating comprises a stack of coating layers including a hydrophobic top coat layer, an anti-reflective coating (AR coating) layer, a scratch and/or abrasion resistant coating (hardcoat) layer, and optionally an impact-resistant coating layer. These layers being deposited in this indicated order (reverse from the final order on the optical article) on the carrier concave surface.

The hydrophobic top coat, which in the finished optical article constitutes the outermost coating on the optical article, is intended for improving dirty mark resistance of the finished optical article and in particular of the anti-reflecting coating.

As known in the art, a hydrophobic top coat is a layer wherein the stationary contact angle to deionized water is at least 60°, preferably at least 75° and more preferably at least 90°, and even better more than 100°.

The stationary contact angle is determined according to the liquid drop method in which a water drop having a diameter smaller than 2 mm is formed on the optical article and the contact angle is measured.

The hydrophobic top coats preferably used in this invention are those which have a surface energy of less than 14 m Joules/$m^2$.

The invention has a particular interest when using hydrophobic top coats having a surface energy of less than 13 m Joules/$m^2$ and even better less than 12 m Joules/$m^2$.

The surface energy values referred just above are calculated according to Owens Wendt method described in the following document: "Estimation of the surface force energy of polymers" Owens D.K. - Wendt R.G. (1969) J. Appl. Polym. Sci., 1741-1747.

Such hydrophobic top coats are well known in the art and are usually made of fluorosilicones or fluorosilazanes i.e. silicones or silazanes bearing fluor-containing groups. Example of a preferred hydrophobic top coat material is the product commercialized by Shin Etsu under the name KP 801 M.

The top coat may be deposited onto the carrier using any typical deposition process, but preferably using thermal evaporation technique.

Thickness of the hydrophobic top coat usually ranges from 1 to 30 nm, preferably 1 to 15 nm.

Anti-reflecting coatings and their methods of making are well known in the art. The anti-reflecting can be any layer or stack of layers which improves the anti-reflective properties of the finished optical article.

The anti-reflecting coating may preferably consist of a mono- or multilayer film of dielectric materials such as SiO, $SiO_2$ $Si_3N_4$, $TiO_2$, $ZrO_2$, $Al_2O_3$, $MgF_2$ or $Ta_2O_5$, or mixtures thereof.

The anti-reflecting coating can be applied in particular by vacuum deposition according to one of the following techniques:

    1) - by evaporation, optionally ion beam-assisted;
    2) - by spraying using an ion beam,
    3) - by cathode sputtering; or
    4) - by plasma-assisted vapor-phase chemical deposition.

In case where the film includes a single layer, its optical thickness must be equal to $\lambda/4$ where $\lambda$ is wavelength of 450 to 650 nm.

Preferably, the anti-reflecting coating is a multilayer film comprising three or more dielectric material layers of alternatively high and low refractive indexes.

Of course, the dielectric layers of the multilayer anti-reflecting coating are deposited on the optical surface of the flexible carrier or the hydrophobic top coat in the reverse order they should be present on the finished optical article.

A preferred anti-reflecting coating may comprises a stack of four layers formed by vacuum deposition, for example a first $SiO_2$ layer 21 having an optical thickness of about 100 to 160 nm, a second $ZrO_2$ layer 22 having an optical thickness of about 120 to 190 nm, a third $SiO_2$ layer 23 having an optical thickness of about 20 to 40 nm and a fourth $ZrO_2$ layer 24 having an optical thickness of about 35 to 75 nm.

Preferably, after deposition of the four-layer anti-reflecting stack, a thin layer of $SiO_2$ of 1 to 50 nm thick (physical thickness) may be deposited. This layer promotes the adhesion between the anti-reflecting stack and the abrasion and/or scratch-resistant coating generally subsequently deposited, and is not optically active.

The next layer to be deposited is the abrasion and/or scratch-resistant coating. Any known optical abrasion and/or scratch-resistant coating composition can be used to form the abrasion and/or scratch-resistant coating. Thus, the abrasion and/or scratch-resistant coating composition can be a UV and/or a thermal curable composition.

By definition, an abrasion and/or scratch-resistant coating is a coating which improves the abrasion and/or scratch-resistant of the finished optical article as compared to a same optical article but without the abrasion and/or scratch-resistant coating.

Preferred abrasion and/or scratch-resistant coatings are those made by curing a precursor composition including epoxyalkoxysilanes or a hydrolyzate thereof, optionally colloidal mineral fillers and a curing catalyst. Examples of such compositions are disclosed in US 4,211,823, WO 94/10230, US 5,015,523, EP 614957.

The most preferred abrasion and/or scratch-resistant coating compositions are those comprising as the main constituents an epoxyalkoxysilane such as, for example, γ-glycidoxypropyltrimethoxysilane (GLYMO) and a dialkyldialkoxysilane such as, for example dimethyldiethoxysilane (DMDES), colloidal silica and a catalytic amount of a curing catalyst such as aluminum acetylacetonate or a hydrolyzate thereof, the remaining of the composition being essentially comprised of solvents typically used for formulating these compositions.

In order to improve the adhesion of the abrasion and/or scratch-resistant coating to the impact-resistant primer coating to be subsequently deposited or to the latex layer, an effective amount of at least one coupling agent can be added to the abrasion and/or scratch-resistant coating composition.

The preferred coupling agent is a pre-condensed solution of an epoxyalkoxysilane and an unsatured alkoxysilane, preferably comprising a terminal ethylenic double bond.

Examples of epoxyalkoxysilanes are γ-glycidoxypropyltrimethoxysilane, γ-glycidoxypropylpentamethyldisiloxane, γ-glycidoxypropylmethyldiisopropenoxysilane, (y-glycidoxypropyl)methyldiethoxy-silane, γ-glycidoxypropyldimethylethoxysilane, γ-glycidoxypropyldiisopropylethoxysilane and (γ-glycidoxypropyl)bis(trimethylsiloxy) methylsilane.

The preferred epoxyalkoxysilane is γ-glycidoxypropyltrimethoxysilane.

The unsatured alkoxysilane can be a vinylsilane, an allylsilane, an acrylic silane or a methacrylic silane.

Examples of vinylsilanes are vinyltris(2-methoxyethoxy)silane, vinyltrisisobutoxysilane, vinyltri-t-butoxysilane, vinyltriphenoxysilane, vinyltrimethoxysilane, vinyltriisopropoxysilane, vinyltriethoxysilane, vinyltriacetoxysilane, vinylmethyldiethoxysilane, vinylmethyldiacetoxysilane, vinylbis(trimethylsiloxy)silane and vinyldimethoxyethoxysilane.

Examples of allylsilanes are allyltrimethoxysilane, alkyltriethoxysilane and allyltris (trimethylsiloxy)silane.

Examples of acrylic silanes are 3-acryloxypropyltris (trimethylsiloxy) silane, 3-acryloxypropyltrimethoxysilane, acryloxypropylmethyl-dimethoxysilane, 3-acryloxypropylmethylbis(trimethylsiloxy) silane, 3-acryloxypropyldimethylmethoxysilane, n-(3-acryloxy-2-hydroxypropyl)-3-aminopropyltriethoxysilane.

Examples of methacrylic silanes are 3-methacryloxypropyltris (vinyldimethoxylsiloxy)silane, 3-methacryloxypropyltris (trimethylsiloxy) silane, 3-methacryloxypropyltris(methoxyethoxy)silane, 3-methacryloxypropyltrimethoxysilane, 3-methacryloxypropylpentamethyl disiloxane, 3-methacryloxypropylmethyldimethoxysilane, 3-methacryloxypropylmethyl-diethoxysilane, 3-methacryloxypropyldimethyl methoxysilane, 3-methacryloxypropyldimethylethoxysilane, 3-methacryloxypropenyltrime-thoxysilane and 3-methacryloxypropylbis (trimethylsiloxy)methylsilane.

The preferred silane is acryloxypropyltrimethoxysilane.

Preferably, the amounts of epoxyalkoxysilane(s) and unsaturated alkoxysilane(s) used for the coupling agent preparation are such that the weight ratio.

$$R = \frac{\text{weight of epoxyalkoxysilane}}{\text{weight of unsaturated alkoxysilane}}$$

verifies the condition $0.8 \leq R \leq 1.2$.

The coupling agent preferably comprises at least 50% by weight of solid material from the epoxyalkoxysilane(s) and unsaturated alkoxysilane(s) and more preferably at least 60% by weight.

The coupling agent preferably comprises less than 40% by weight of liquid water and/or organic solvent, more preferably less than 35% by weight.

The expression "weight of solid material from epoxyalkoxy silanes and unsaturated alkoxysilanes" means the theoretical dry extract from those silanes which is the calculated weight of unit $Q_k Si O_{(4-k)/2}$ where Q is the organic group that bears the epoxy or unsaturated group and $Q_k Si O_{(4-k)/2}$ comes from $Q_k Si R'O_{(4-k)}$ where Si R' reacts to form Si OH on hydrolysis.

k is an integer from 1 to 3 and is preferably equal to 1.

R' is preferably an alkoxy group such as $OCH_3$.

The water and organic solvents referred to above come from those which have been initially added in the coupling agent composition and the water and alcohol resulting from the hydrolysis and condensation of the alkoxysilanes present in the coupling agent composition.

Preferred preparation methods for the coupling agent comprises :

1) mixing the alkoxysilanes
2) hydrolysing the alkoxysilanes, preferably by addition of an acid, such a hydrochloric acid
3) stirring the mixture
4) optionally adding an organic solvent
5) adding one or several catalyst(s) such as aluminum acetylocetonate
6) Stirring (typical duration: overnight).

Typically the amount of coupling agent introduced in the scratch-resistant coating composition represents 0.1 to 15% by weight of the total composition weight, preferably 1 to 10% by weight.

The abrasion and/or scratch-resistant coating composition can be applied on the anti-reflecting coating using any classical method such as spin, dip or flow coating.

The abrasion and/or scratch-resistant coating composition can be simply dried or optionally procured before application of the subsequent impact-resistant primer coating (which may be the dry latex layer) or implementation of the process of the invention. Depending upon the nature of the abrasion and/or scratch-resistant coating composition thermal curing, UV-curing or a combination of both can be used.

Thickness of the abrasion and/or scratch-resistant coating, after curing, usually ranges from 1 to 15 $\mu$m, preferably from 2 to 6 $\mu$m.

Before applying the impact resistant primer on the scratch-resistant coating, it is possible to subject the surface of the scratch-resistant coating to a corona treatment or a vacuum plasma treatment, in order to increase adhesion.

The impact-resistant primer coating can be any coating typically used for improving impact resistance of a finished optical article. Also, this coating generally enhances adhesion of the scratch-resistant coating on the substrate of the finished optical article.

By definition, an impact-resistant primer coating is a coating which improves the impact resistance of the finished optical article as compared with the same optical article but without the impact-resistant primer coating.

Typical impact-resistance primer coatings are (meth)acrylic based coatings and polyurethane based coatings.

(Meth)acrylic based impact-resistant coatings are, among others, disclosed in US-5,015,523, US-6,503,631 whereas thermoplastic and cross linked based polyurethane resin coatings are disclosed inter alia, in Japanese Patents 63-141001 and 63-87223, EP-0404111 and US-5,316,791.

In particular, the impact-resistant primer coating can be made from a latex composition such as a poly(meth)acrylic latex, a polyurethane latex or a polyester latex.

Among the preferred (meth)acrylic based impact-resistant primer coating compositions there can be cited polyethyleneglycol(meth)acrylate based compositions such as, for example, tetraethyleneglycoldiacrylate, polyethyleneglycol (200) diacrylate, polyethyleneglycol (400) diacrylate, polyethyleneglycol (600) di(meth)acrylate, as well as urethane (meth)acrylates and mixtures thereof.

Preferably the impact-resistant primer coating has a glass transition temperature (Tg) of less than 30°C.

Among the preferred impact-resistant primer coating compositions, there may be cited the acrylic latex commercialized under the name Acrylic latex A-639 commercialized by Zeneca and polyurethane latex commercialized under the names W-240 and W-234 by Baxenden.

In a preferred embodiment, the impact-resistant primer coating may also includes an effective amount of a coupling agent in order to promote adhesion of the primer coating to the optical substrate and/or to the scratch-resistant coating.

The same coupling agents, in the same amounts, as for the scratch-resistant coating compositions can be used with the impact-resistant coating compositions.

The impact-resistant primer coating composition can be applied on the scratch-resistant coating using any classical method such as spin, dip, or flow coating.

The impact-resistant primer coating composition can be simply dried or optionally procured.

The exposed layer of the coating in contact with the surface of the optical article may have adhesive properties or may be a latex having adhesive properties activable with water or a mixture of water and solvent. When the exposed layer has adhesive properties, there is no need to use a liquid curable glue or water or a mixture of water and solvent.

Example of materials for forming layers with adhesive properties are pressure-sensitive adhesives (PSA) and hot-melt adhesives (HMA).

By "pressure-sensitive adhesive" (or sometimes "self-adhesive material"), it is meant a distinct category of adhesives. PSAs are aggressively and permanently tacky in dry form (solvent-free) at room temperature or at temperature of use. They are characterized by their ability to firmly adhere to a variety of dissimilar surfaces under a slight pressure by forming Van der Waals bonds with said surfaces. In any case, no other external energy (such as temperature, solvent, UV...) but pressure is compulsory to form the adhesive joint. However, other external energy may be used to enhance the adhesive performance. Another requirement is that PSAs should have a sufficient cohesive strength to be removed by peeling without leaving residues to the surfaces. PSAs are available into three forms: solvent born, water born (latex) and the form obtained by hot melt process. The dry and unflowable PSA layers according to the invention may be formed by evenly applying a liquid form or by transferring a dry layer previously formed on a functional coating. Thereafter, if liquid, the deposited layer is dried to an unflowable state by heating. Usually, heating will be performed at a temperature ranging from 40 °C to 130 °C.

By "hot-melt adhesive", it is intended to mean a room temperature solid but flexible adhesive, which melts or drops in viscosity upon heating, and rapidly sets with cooling to create a bond. Preferably, the HMA used in the present invention will not be flowable even after heating of step g) because it is laminated firstly in very tight conditions. So the variation of thickness of the adhesive layer in the final lens, when coatings are transferred, will typically be less than 2 microns.

HMAs can be repeatedly softened by heat and hardened or set by cooling (thermoplastic HMAs), except for reactive HMAs, which are applied like conventional HMAs but cross-link forming permanent, non-remelting bonds. Additives such as siloxanes or water can be used to form the cross-linked bonds. An important property of HMAs is the ability to solidify or congeal or "set" very rapidly under normal ambient conditions, preferably almost instantaneously, when cooling down from the application temperature. They are available in dry form, or in solvent and latex based forms. The dry and unflowable layers according to the invention may be formed by evenly applying a liquid form on either a geometrically defined surface of the lens substrate or a functional coating. Thereafter, the deposited liquid latex layer is dried to an unflowable state by heating. Usually, heating will be performed at a temperature ranging from 40 °C to 130 °C. When a dry form is used, it is heated to the temperature where it will flow readily, and then it is applied to either a geometrically defined surface of the lens substrate or a functional coating. It can also be extruded into place by using a hot-melt extruder or die face.

As is known in the art, if a polymer or polymer blend does not have the properties of a PSA or a HMA per se within the meaning of these terms as used herein, it can function as a PSA or a HMA by admixture with small quantities of additives. In some embodiments, the transparent adhesive composition of the invention may comprise, apart from the polymer material, tackifiers, preferably tackifier resins, plasticizers, diluents, waxes, liquid oils and various other components for adjusting the tack, rheology characteristics (including viscosity, thixotropy, and the like), adhesive bond strength characteristics, rate of "set", low temperature flexibility, color, odor, etc. Such plasticizers or tackifying agents are preferably compatible with the blend of polymers, and include: aliphatic hydrocarbons, mixed aliphatic and aromatic hydrocarbons, aromatic hydrocarbons, hydrogenated esters and polyterpenes.

In a preferred embodiment, the transparent adhesive composition may also include an effective amount of a coupling agent (as defined hereinafter) in order to promote its adhesion with the geometrically defined surface of the lens substrate and/or the functional coating to be transferred, in particular an abrasion and/or scratch-resistant coating layer. The transparent adhesive composition may also comprise a classical dye or a photochromic dye.

The families of PSAs are classified according to the main elastomer used in the adhesive formulation. The main families are: natural rubber based PSAs, polyacrylates based PSAs (such as polyethylhexyl acrylate, poly n-butyl acrylate), styrenic block copolymers based PSAs [such as Styrene-Isoprene (SI), Styrene-Isoprene-Styrene (SIS), Styrene-Butadiene (SB), Styrene-Butadiene-Styrene (SBS)], and mixtures thereof. Styrene-butadiene random copolymers, butyl rubber, polyisobutylene, silicon polymers, synthetic polyisoprene, polyurethanes, polyvinyl ethyl ethers, polyvinyl pyrrolidone, and mixtures thereof, may also be used as bases for PSA formulations. For examples, see Sobieski et al., Handbook of Pressure-Sensitive Adhesive Technology, 2nd ed., pp. 508-517 (D. Satas, ed.), Van Nostrand Reinhold, New York (1989), incorporated by reference in its entirety.

The PSAs used in this invention are preferably selected from polyacrylate based PSAs and styrenic block copolymers based PSAs.

Examples of polymers, which can be used for formulating HMAs are solvent-free polyamides, polyethylene, polypropylene and other olefin-type polymers, polyurethanes, polyvinyl pyrrolidones, polyesters, poly(meth)acrylic systems, other copolymers thereof, and mixtures thereof. The hot-melt adhesives according to the invention are preferably selected from dry poly(meth)acrylic latexes, such as the acrylic latex commercialized under the name Acrylic latex A-639 by Zeneca, dry polyurethane latexes, such as the latexes commercialized under the names W-240 and W-234 by Baxenden, dry polyester latexes and mixtures thereof. Preferred latexes are polyurethane latexes. Other preferred latexes are core/shell latexes such as those described in U.S. Pat. No. 6,503,631 to Essilor and especially latexes based on alkyl(meth)acrylates such as butyl acrylate or butyl methacrylate.

Application of the liquid activable latexes can be performed by any usual process such a dip coating, flow coating or spin coating. Thereafter, the deposited liquid latex layer is dried by heating. Usually, heating will be performed at a temperature ranging from 40°C to 130°C and will be preferably pursued until at least a tack free layer is obtained. Typically heating will last from 60° to 100° C for 15 seconds to 90 seconds.

Preferred latexes are (meth) acrylic latexes such as the acrylic latex commercialized under the name Acrylic latex A-639 by Zeneca, polyurethane latexes such as the latexes commercialized under the names W-240 and W-234 by Baxenden and polyester latexes. Preferred latexes are polyurethane latexes.

Other preferred latexes are core/shell latexes such as those described in Essilor US patent US 6,503,631 and especially latexes based on alkyl(meth)acrylates such as butylacrylate or butyl(meth)acrylate.

In a preferred embodiment, the latex layer may also include an effective amount of a coupling agent (as previously defined) in order to promote adhesion of the latex layer with the substrate and/or the coating, in particular an abrasion and/or scratch-resistant coating.

The latexes may also comprise a classical dye or a photochromic dye.

Latexes comprising a photochromic dye and the method for obtaining them are disclosed for example in the following Essilor patents: EP 1161512; US 6,770,710; US 6,740,699.

Generally, after drying and curing the latex layer has a thickness ranging from 0.05 to $30\mu m$, preferably from 0.5 to $20\mu m$ and better from 0.6 to $15\mu m$.

The latex layer may preferably constitute an impact-resistant primer coating of the coated optical article.

Then the latex preferably fulfills the preferred requirements of impact resistant primer coating such as Tg of the latex layer being less than 30°C.

With such dry latex layers as the means capable to allow adhesion, there is preferably used water or a mixture of water and organic solvent as an adhesion activating agent.

Water is preferably dionized water, or a mixture of water and one or more classical organic solvents such as alkanols, typically $C_1$-$C_6$ alkanols, for example methanol or ethanol. Preferably there is no organic solvent.

Typically there is deposited at least one drop of activating aqueous liquid, preferably at the center of the front convex surface of the optical article itself or on the dry latex layer.

The liquid curable glue or adhesive may be any curable glue or adhesive, preferentially a thermally curable or photocurable, in particular UV curable, glue or adhesive that will promote adhesion of the coating to the surface of the optical article without impairing the optical properties of the optical article.

Some additives such as photochromic dyes and/or pigments may be included in the glue.

Although the liquid glue or adhesive is preferably dispersed at the center, it can be dispersed in a random pattern, spread out firstly via spin coating, or sprayed using a precision dispensing valve. By even layer distribution, it is meant that the variation of thickness of the glue or adhesive layer, once cured, has no consequence on the optical power of the final optical article.

The curable glue or adhesive can be polyurethane compounds, epoxy compounds, (meth)acrylate compounds such as polyethyleneglycol di(meth)acrylate, ethoxylated bisphenol A di(meth)acrylates.

The preferred compounds for the curable glue or adhesive are acrylate compounds such as polyethyleneglycoldiacrylates, ethoxylated bisphenol A diacrylates, various trifunctional acrylates such as (ethoxylated) trimethylolpropane triacrylate and tris(2-hydroxyethyl)isocyanurate.

Monofunctional acrylates such as isobornylacrylate, benzylacrylate, phenylthioethylacrylate are also suitable.

The above compounds can be used alone or in combination. Preferably, when cured, the glue layer has an even thickness.

The thickness of the final glue layer after curing is less than 100 $\mu m$, preferably less than 80 $\mu m$, most preferably less than 50 $\mu m$ and usually 1 to 30 $\mu m$.

In a preferred embodiment the coating is a stack of coating layers comprising, starting from the concave surface of the flexible carrier, a hydrophobic and/or oleophobic top coat, an anti-reflecting coating, an abrasion and/or scratch-resistant coating and an impact primer coating (HMC). Preferably, the impact primer coating is a dry latex layer whose adhesive properties can be activated by means of water or a mixture of water and at least one organic solvent.

The following examples illustrate the present invention.

<u>General considerations</u>

The coated carrier used in the example is a polycarbonate (PC) flexible carrier bearing on its concave surface a coating stack including, starting from the carrier, a top coat, an anti-reflection coating, an abrasion and/or scratch resistant coating and a dry latex layer as the last exposed layer. Such a coating stack is called HMC coating.

<u>STEP 1 : Deposition of protecting and releasing coating.</u>

The composition of the protecting and releasing coating was as follows:

| Component | Parts by weight |
| --- | --- |
| PETA LQ (acrylic ester of pentaerythritol) | 5.00 |
| Dowanol PnP | 5.00 |
| Dowanol PM | 5.00 |
| n-propanol | 5.00 |
| 1360 (Silicone Hexa-acrylate, Radcure) | 0.10 |
| Coat-O-Sil 3503 (reactive flow additive) | 0.06 |
| Photoinitiator | 0.20 |

The PC carrier is cleaned using soapy water and dried with compressed air. The carrier convex surface is then coated with the above protecting coating composition via spin coating with application speed of 600 rpm for 3 seconds and dry speed of 1200 rpm for 6 seconds. The coating is cured using Fusion System H+ bulb at a rate of 1.524 m/minute (5 feet per minute).

<u>STEP 2: Deposition of hydrophobic top coat and anti-reflective (AR) coating</u>

The PC carrier after deposition of the protecting coating is vacuum coated as follows:
A/ Standard Vacuum AR Treatment: The Vacuum AR treatment is accomplished in a standard box coater using well known vacuum evaporation practices. The following is one procedure for obtaining the VAR on the mold:

1. The carrier having the protective coating already applied on the surface is loaded into a standard box coater and the chamber is pumped to a high vacuum level.
2. Hydrophobic coating (Chemical = Shin Etsu KP801M) is deposited onto the surface of the carrier using a thermal evaporation technique, to a thickness in the range of 2-15 nm.
3. The dielectric multilayer AR coating, consisting of a stack of sublayers of high and low refractive index materials is then deposited, in reverse of the normal order. Details of this deposition are as such :

The optical thicknesses of the alternating low and high refractive index layers are presented in the table (They are deposited in the indicated order, from the mold surface):

| Low index | 103-162 nm |
| --- | --- |
| High index | 124-190 nm |
| Low index | 19-37 nm |
| High index | 37-74 nm |

A preferred stack is a stack wherein the low index material is $SiO_2$ and the high index material is $ZrO_2$.
B/ At the completion of the deposition of the four-layer anti-reflection stack, a thin layer of $SiO_2$, comprising of a physical thickness of 1-50 nm, is deposited. This layer is to promote adhesion between the oxide anti-reflection stack and a lacquer hard-coating which will be deposited on the coated mold at a later time.

STEP 3: Deposition of hard Coat (HC)

The composition of the hard coating is as follows:

| Component | Parts by weight |
|---|---|
| Glymo | 21.42 |
| 0.1N HCl | 4.89 |
| Colloidal silica | 30.50 |
| Methanol | 29.90 |
| Diacetone alcohol | 3.24 |
| Aluminium acetylacetonate | 0.45 |
| Coupling agent | 9.00 |
| Surfactant FC-430 (3M company) | 0.60 |

The PC carrier after deposition of protecting coating and AR coating in Steps 1 and 2 is then spin coated by HC solution at 600 rpm/1200 rpm, and precured 10 minutes at 80°C,

STEP 4 : Description of latex primer coating

The composition of the primer is as follows:

| Component | Parts by weight |
|---|---|
| Polyurethane latex W-234 | 35.0 |
| Deionized water | 50.0 |
| 2-Butoxy ethanol | 15.0 |
| Coupling agent | 5.00 |

The PC carrier is spin coated at 600 rpm/1200 rpm with the latex primer solution and postcured for 1 hour at 80°C.
The coupling agent is a precondensed solution of:

| Component | Parts by weight |
|---|---|
| GLYMO (Glycidoxypropyltrimethoxysilane) | 10 |
| Acryloxypropyltriméthoxysilane | 10 |
| 0.1 N HCl | 0.5 |
| Aluminum acetylacetonate | 0.5 |
| Diacetone alcohol | 1.0 |

**Example 1**

A -2.00 dioptries polycarbonate (PC) lens with back curve of 5.0 base is placed on the optical article receiving means of the pressing apparatus of figures 1 and 2 with its back concave surface upwardly oriented. Then 0.2g of UV curable glue was deposited on the lens surface and then, a HMC reversely pre-coated PC carrier with a plano shape of 5.8 base (0.56mm thick) was applied on the lens back concave surface with the HMC coating facing the lens. After that, the supporting means with the lens and carrier is placed in the pressing apparatus. Then, a constant air pressure source is connected to the air admission/release means and the in/out valve is turned on. When pressure within the accumulator reaches 9.65 bars (14PSI), the in/out valve is turned off and the air admission/release means is disconnected from the air source. The pressing apparatus with the lens is placed in a UV oven from the top for 30 seconds in 80 mW/cm$^2$. After UV curing, the device was de-pressurized by turning on the air in/out valve and lens and carrier were laminated into one part. Then, the carrier was removed and the full HMC coating layers were transferred to the lens back side. There is no AR cracking during this transfer.

UV curable glue composition:

|  | Wt% |
|---|---|
| Bis (4-methacryloyl thioethyl) sulphide | 45 |
| Ethoxylated bisphenol-A dimethacrylate | 30 |
| Diethylene glycol diacrylate | 25 |
| Irgacure 819® (3% photoinitiator for 100% of monomers) | 3 phr |

## Example 2

Example 1 is repeated except the last latex layer on the HMC carrier is considered as a hot-melt type of pressure sensitive adhesive. After the lens was placed on the lens supporting means, few drops of water are added on the lens surface so that the dry latex carrier with AR layer can be applied very well without creating any air bubble. The air pressure was applied as in example 1. Then, the pressing apparatus with the lens sample maintained under pressure is placed in air oven at 110° C for 20 minutes. After heating cycle, the device is cooled down in room temperature for 5 minutes while the device was still pressurized. Then, the pressing apparatus is de-pressurized and lens and carrier were laminated into one part. After the carrier is removed, the full HMC coating layers are transferred to the lens back side. There is no AR cracking during this transfer.

## Example 3

Example 1 is repeated except a CR-39® lens with back curve 6.0 base is used and it is fined only without polish. The lens is fined with 15 microns pad for 2 minutes. A clear 6.4 base PC wafer (0.56 thickness) is used without any HMC coating on it. There is only a protecting and releasing coating layer on this carrier so that the coating liquid would not stick to the carrier surface. Few drops (-0.2g) of UV curable coating solution with 100% of solid are applied on the rough surface of the lens backside. After inflation of the accumulator, the liquid coating solution drops are spread out very well under the PC wafer. Then, the pressing apparatus is placed in an UV oven for 30 seconds at 80 mW/cm$^2$, while the pressure is kept 9.65 bars (14 PSI). After the UV curing and removal of the wafer, a clear CR-39® lens is obtained with no any surfacing scratch mark seen in the arc lamp. The UV hard-coated CR-39® lens can be coated with anti-reflective coating (AR) layer.

UV curable coating solution :

|  | Wt% |
|---|---|
| 3,4-epoxycydohexylmethyl-3,4-expoxycydohexane carboxylate | 13 |
| 1,4-butanediol diglycidyéther | 30.29 |
| Hexanediol diacrylate | 10.85 |
| Dipentiaerytritol pentaacrylate | 30.36 |
| Diethyleneglycol diacrylate | 7.01 |
| Isobornyl acrylate | 2.29 |
| UVI 6974® (cationic photo-initiator) | 5.25 |
| Irgacure 500® (free radical initiator) | 0.82 |
| SLF-18® (hydrocarbon base surfactant) | 0.1 |

## Example 4

Example 3 is repeated except no PC wafer is used and an optical grade surface silicone membrane is applied directly against the liquid coating <u>when the membrane</u> is being inflated up to 14 PSI (9.65 bars). Then, the pressing apparatus is placed in an UV oven for 30 seconds at 80 mW/cm$^2$. After released the pressure, a clear CR-39® lens is obtained with no any surfacing scratch mark seen in the arc lamp. The UV hard-coated CR-39® lens can be coated with AR layer.

## Example 5

Example 2 is repeated except a 70mm diameter lens is used with optical power of +1.00 with cylinder -2.00 whose back curve is 4.50 in low curve and 6.30 in high curve side and 6.0 base carrier with 73mm diameter is used. Besides, a pressure relief valve (pop safety valve) with 15 PSI set from McMaster Co is installed in the apparatus as shown in the figure 1 to maintain the same balloon pressure and shape applying on the carrier during the thermal cycle. After the lens and the carrier are laminated in the apparatus with pop safety valve at 15 PSI, it is placed in air oven at 110 C for 30 minutes. During the heating cycle, the balloon was kept in the same pressure and shape applied on the carrier. After the device is cooled down and de-pressurized, the carrier is stuck to the lens very well through the entire lens surface, especially in the edge area. When the carrier is removed, the lens has a full transferred HMC coating layer from the center to the edge without any no transfer spot as shown in Figure 7.

## Comparative example

Example 5 is repeated except a pressure relief valve was not installed. After the lens and carrier are laminated at the same pressure of 15 PSI in the apparatus, it is placed in air oven at 100°C for 30 minutes. During heating cycle, the balloon's shape applied on the carrier is changed a lot. As a result, there is an air gap on the edge between lens and carrier due a pressure variation. After the device is cooled down and de-pressurized and the carrier is removed, the lens does not have a full transferred HMC coating layer at the edge area leaving a no transfer spot as shown in Figure 7.

The detailed description hereinbefore with reference to the drawings illustrates an inflatable membrane pressing apparatus for a film or coating application or lamination process. The inflatable membrane pressing apparatus comprises:

- a supporting means for supporting an article ;
- an inflatable membrane device comprising a pressurized fluid accumulator a face of which is partly formed by an inflatable membrane ;
- a holding frame for holding the supporting means and the inflatable membrane device in a spaced apart relationship with the inflatable membrane facing the supporting means ; and
- a pressurized fluid admission/release means for introducing and releasing pressurized fluid in and from the fluid accumulator to inflate and deflate the membrane, wherein the pressurized fluid admission/release means comprises a pressure relief valve for controlling the pressure of the fluid within the accumulator.

The aforementioned characteristics can be implemented in numerous different manners. In order to illustrate this, some alternatives are briefly indicated.

In the above mentioned description, the article was an ophthalmic lens. The article can be any another optical article like, for example, a progressive power lens, a multifocal lens, a toric lens or a lens blank. The optical article can be also any device arranged for either concentrating or diverging light. The optical article can be also be a part of an imaging system such as monocular, binoculars, telescope, spotting scope, telescoping gun sight, microscope and camera (photographic lens). More generally the article can be any article onto which a film or a coating can be applied. The article can be for example, the screen surface of, in particular but not limited to, a cell phone, lap top or a personal digital assistant. The article can also be a surface like, for example, a surface made of plastic, material, ceramic material or any other material onto which a film or a coating can be applied.

In the above-mentioned description the supporting means comprised a receiving aperture 22. The supporting means can also be a rubber cushion, a rubber o-ring or an inflatable membrane. More generally the supporting means can be any device arranged to support the article in a centered manner.

The pressure relief valve 42 can be any pressure relief valve which is arranged to

- be set to a prescribed maximum pressure value;
- to maintain the pressure within the accumulator to the prescribed maximum value throughout the process, in particular during the heating or UV curing step; and
- to maintain the shape of the inflatable membrane constant.

The pressure relief valve 42 can be, for example, a pop-safety, air, gas, or liquid relief valve which protects vessels and piping systems from overpressure. Pop-safety valves automatically "pop" open if the set pressure is exceeded, and remain open as long as the pressure is above this level. When the pressure level drops back to the set pressure, the valves automatically close. Pop-safety valves are available for compressed air, gases and steam. Air, gas and liquid relief valves have a fixed lip in the disc to increase lift as the pressure rises. They start to open at the set pressure, but require about 20 to 25% overpressure to completely open. As pressure drops, valves begin to close, shutting fully at approximately the set pressure. Relief valves should be installed as close as possible to the vessel they protect. ASME-coded valves are also National Board certified. They are furnished factory-set, tested and sealed at the stated pressure and are not adjustable.

In the above-mentioned description the film can be a coated film or an uncoated film. The coated film can be coated on one face or on both faces. When a film coated on only one face is used, the film can be placed on the curable glue or the coating solution either with its coated or its uncoated face in contact with the curable glue or the coating solution.

More generally, the above-mentioned description also intends to cover a process for applying a film or a coating onto a surface of an article using an inflatable membrane pressing apparatus as previously disclosed which comprises maintaining the inflatable membrane to a set maximum pressure value during the entire process before recovering the coated article.

In preferred embodiments, the process comprises a heating and/or curing step.

In still preferred embodiments, the process comprises applying a film or a coating born by a flexible carrier on the article surface.

The remarks made herein before demonstrate that the detailed description with reference to the drawings, illustrate rather than limit the invention. There are numerous alternatives, which fall within the scope of the appended claims. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps.

**Claims**

1. An inflatable membrane pressing apparatus (1) for a film or coating application or lamination process comprising:

   - a supporting means (20) for supporting an article ;
   - an inflatable membrane device (30) comprising a pressurized fluid accumulator (35, 36) a face of which is partly formed by an inflatable membrane (35);
   - a holding frame (10) for holding the supporting means (20) and the inflatable membrane device (30) in a spaced apart relationship with the inflatable membrane facing the supporting means ; and
   - a pressurized fluid admission/release means (40) for introducing and releasing pressurized fluid in and from the fluid accumulator to inflate and deflate the membrane, wherein the pressurized fluid admission/release means comprises a pressure relief valve (42) for controlling the pressure of the fluid within the accumulator.

2. The inflatable membrane pressing apparatus of claim 1 wherein the accumulator comprises a removable cover.

3. The inflatable membrane pressing apparatus of claim 2, wherein the admission/releasing means is connected to the removable cover.

4. The inflatable membrane pressing apparatus of claim 2 or 3, wherein the removable cover is at least partly made of a UV transparent material.

5. The inflatable membrane pressing apparatus of claim 3 or 4, wherein the removable cover is made of a plastic material, a metal or an alloy.

6. The inflatable membrane pressing apparatus according to anyone of claims 1 to 5, wherein the inflatable membrane device further comprises a trunconical guiding means for guiding the inflatable membrane during inflation thereof.

7. The inflatable membrane pressing apparatus according to anyone of claims 1 to 6, wherein the supporting means is slidably mounted in the holding frame.

8. The inflatable membrane pressing apparatus according to anyone of claims 1 to 7, wherein supporting means is an additional inflatable membrane device.

9. The inflatable membrane pressing apparatus according to anyone of claims 1 to 8, which is a portable pressing apparatus.

10. A process for applying a film or a coating onto a surface of an article using the inflatable membrane pressure apparatus as in anyone of claims 1 to 9, wherein the inflatable membrane is maintained to a set maximum pressure during the entire process before recovering a coated article.

11. The process of claim 10, wherein the process comprises a heating and/or a curing step.

12. The process of claim 10 or 11, wherein comprising applying a film or a coating born by a flexible carrier onto the article surface.

13. A process for applying a film or a coating onto a surface of an article using the inflatable membrane pressing apparatus of anyone of claims 1 to 9, which comprises:

- Placing an article in the supporting means with its surface to be coated facing upwardly ;
- Depositing an amount of a curable glue or a coating solution on the surface to be coated of the article ;
- Placing a film or a coating born by a flexible carrier on the curable glue ;
- Introducing the supporting means bearing the article and the film or coating born by a flexible carrier in the apparatus ;
- Inflating the inflatable membrane up to a set maximum value of pressure;
- Heating and/or curing the curable glue or coating solution, while maintaining the inflatable membrane pressure to the set maximum value ;
- Recovering the article with its surface coated with the film or the coating.

14. A process for applying a film or a coating born by a flexible carrier and comprising an outermost layer of a dry latex onto a surface of an article using the inflatable membrane pressing apparatus of anyone of claims 1 to 9, which comprises:

- Placing an article in the supporting means with its surface to be coated facing upwardly ;
- Depositing an amount of water or of an aqueous solvent on the surface to be coated of the article or the outermost dry latex layer ;
- Placing the film or the flexible carrier with the outermost layer on the surface to be coated of the article ;
- Introducing the supporting means bearing the article and the film or the flexible carrier in the apparatus ;
- Inflating the inflatable membrane up to a set maximum value of pressure ;
- Heating and/or curing the latex layer while maintaining the inflatable membrane pressure to the set maximum value ; and
- Recovering the article with its surface coated with the coating or the film.

15. The process according to anyone of claims 10 to 14, wherein the article is an optical article.

**Patentansprüche**

1. Vorrichtung (1) zum Pressen einer aufblasbaren Membran für das Aufbringen eines Films oder einer Beschichtung oder einen Laminierungsprozess, umfassend:

- ein Trägermittel (20) zum Tragen eines Gegenstands;
- eine aufblasbare Membraneinrichtung (30), welche einen Speicher (35, 36) für mit Druck beaufschlagter Flüssigkeit umfasst, von dem eine Seite teilweise mittels einer aufblasbaren Membran (35) ausgebildet ist;
- einen Halterahmen (10) zum Halten des Trägermittels (20) und der aufblasbaren Membraneinrichtung (30) in einer beabstandeten Beziehung zueinander, wobei die aufblasbare Membran dem Trägermittel zugewandt ist; und
- Mittel (40) zum Einlassen/Ablassen mit Druck beaufschlagter Flüssigkeit für das Einbringen und Ablassen mit Druck beaufschlagter Flüssigkeit in und aus dem Flüssigkeitsspeicher um die Membran aufzublasen oder zu entleeren, wobei die Mittel (40) zum Einlassen/Ablassen mit Druck beaufschlagter Flüssigkeit ein Überdruckventil (42) umfassen um den Druck der Flüssigkeit in dem Speicher zu kontrollieren.

**2.** Vorrichtung zum Pressen einer aufblasbaren Membran nach Anspruch 1, wobei der Speicher eine entfernbare Abdeckung umfasst.

**3.** Vorrichtung zum Pressen einer aufblasbaren Membran nach Anspruch 2, wobei Mittel zum Einlassen/Ablassen mit der entfernbaren Abdeckung verbunden sind.

**4.** Vorrichtung zum Pressen einer aufblasbaren Membran nach Anspruch 2 oder 3, wobei die entfernbare Abdeckung zumindest teilweise aus einem UV-transparenten Material ausgebildet ist.

**5.** Vorrichtung zum Pressen einer aufblasbaren Membran nach Anspruch 3 oder 4, wobei die entfernbare Abdeckung aus einem Kunststoffmaterial, einem Metall oder einer Legierung ausgebildet ist.

**6.** Vorrichtung zum Pressen einer aufblasbaren Membran nach einem der Ansprüche 1 bis 5, wobei die aufblasbare Membraneinrichtung zudem sich verjüngenden Führungsmittel zum Führen der aufblasbaren Membran während ihrem Aufblasen umfasst.

**7.** Vorrichtung zum Pressen einer aufblasbaren Membran nach einem der Ansprüche 1 bis 6, wobei das Trägermittel beweglich in dem Halterahmen angeordnet ist.

**8.** Vorrichtung zum Pressen einer aufblasbaren Membran nach einem der Ansprüche 1 bis 7, wobei das Trägermittel eine zusätzliche aufblasbare Membraneinrichtung ist.

**9.** Vorrichtung zum Pressen einer aufblasbaren Membran nach einem der Ansprüche 1 bis 8, welche eine tragbare Vorrichtung zum Pressen ist.

**10.** Verfahren für das Aufbringen eines Films oder einer Beschichtung an eine Fläche eines Gegenstands unter Verwendung der Vorrichtung zum Pressen einer aufblasbaren Membran gemäß einem der Ansprüche 1 bis 9, wobei die aufblasbare Membran bei einem vorgegebenen maximalen Druck während dem vollständigen Verfahren gehalten wird, bevor ein beschichteter Gegenstand erhalten wird.

**11.** Verfahren nach Anspruch 10, wobei das Verfahren einen Heiz- und/oder Härteschritt umfasst.

**12.** Verfahren nach Anspruch 10 oder 11, umfassend das Aufbringen eines Films oder einer Beschichtung, welche(r) mittels eines flexiblen Trägers auf der Fläche des Gegenstands entsteht.

**13.** Verfahren für das Aufbringen eines Films oder einer Beschichtung an eine Fläche eines Gegenstands unter Verwendung der Vorrichtung zum Pressen einer aufblasbaren Membran gemäß einem der Ansprüche 1 bis 9, welches umfasst:

- Anordnen eines Gegenstands an dem Trägermittel mit seiner zu beschichtenden Fläche nach oben gewandt;
- Aufbringen einer Menge härtbaren Klebestoffs oder einer Beschichtungslösung auf der zu beschichtenden Fläche des Gegenstands;
- Anordnen eines Films oder einer Beschichtung, welche(r) aus einem flexiblen Träger entsteht, auf dem härtbaren Klebstoff;
- Einbringen des Trägermittels, welches den Gegenstand und den Film oder die Beschichtung trägt, welche(r) aus einem flexiblen Träger entstanden ist, in die Vorrichtung;
- Aufblasen der aufblasbaren Membran bis zu einem vorgegebenen maximalen Druckwert;
- Heizen und/oder Härten des härtbaren Klebstoffs oder der Beschichtungslösung, wobei der Druck der aufblasbaren Membran bei dem vorgegebenen Maximalwert gehalten wird;
- Erhalten des Gegenstands, dessen Fläche mit dem Film oder der Beschichtung beschichtet ist.

**14.** Verfahren für das Aufbringen eines Films oder einer Beschichtung, welcher mittels eines flexiblen Träger entstanden ist und eine äußere Schicht aus trockenem Latex umfasst, auf einer Fläche eines Gegenstandes unter Verwendung der Vorrichtung zum Pressen einer aufblasbaren Membran gemäß einem der Ansprüche 1 bis 9, welches umfasst:

- Anordnen eines Gegenstands an dem Trägermittel mit seiner zu beschichtenden Fläche nach oben gewandt;
- Aufbringen einer Menge von Wasser oder einer wässrigen Lösung auf der zu beschichtenden Fläche des Gegenstands oder der äußersten Schicht aus trockenem Latex;

- Anordnen des Films oder des flexiblen Trägers mit der äußersten Schicht an der zu beschichtenden Fläche des Gegenstands;
- Einbringen des Trägermittels, welches den Gegenstand und den Film oder den flexiblen Träger trägt, in die Vorrichtung;
- Aufblasen der aufblasbaren Membran bis zu einem vorgegebenen maximalen Druckwert;
- Heizen und/oder Härten des Schicht aus Latex, wobei der Druck der aufblasbaren Membran bei dem vorgegebenen Maximalwert gehalten wird; und
- Erhalten des Gegenstands, dessen Fläche mit der Beschichtung oder dem Film beschichtet ist.

**15.** Verfahren nach einem der Ansprüche 10 bis 14, wobei der Gegenstand ein optischer Gegenstand ist.


**Revendications**

**1.** Appareil de compression pour membrane gonflable (1) pour un procédé destiné à déposer un film ou un revêtement ou pour un procédé de contre-collage, comprenant :

- un moyen de support (20) pour supporter un article ;
- un dispositif à membrane gonflable (30) comprenant un accumulateur de fluide sous pression (35/36), dont une face est partiellement formée d'une membrane gonflable (35) ;
- un cadre de serrage (10) pour bloquer le moyen de support (20) et le dispositif à membrane gonflable (30) à une certaine distance l'un de l'autre, la membrane gonflable faisant face au moyen de support ; et
- un moyen d'admission / d'évacuation du fluide sous pression (40) pour introduire et évacuer le fluide sous pression dans et depuis l'accumulateur de fluide, de façon à gonfler et à dégonfler la membrane, dans lequel le moyen d'admission / d'évacuation du fluide sous pression comporte une soupape de surpression (42) pour contrôler la pression du fluide à l'intérieur de l'accumulateur.

**2.** Appareil de compression pour membrane gonflable selon la revendication 1, dans lequel l'accumulateur comporte un couvercle amovible.

**3.** Appareil de compression pour membrane gonflable selon la revendication 2, dans lequel le moyen d'admission / d'évacuation est relié au couvercle amovible.

**4.** Appareil de compression pour membrane gonflable selon la revendication 2 ou 3, dans lequel le couvercle amovible est constitué au moins partiellement d'un matériau transparent aux ultraviolets.

**5.** Appareil de compression pour membrane gonflable selon la revendication 3 ou 4, dans lequel le couvercle amovible est constitué d'un matériau plastique, d'un métal ou d'un alliage.

**6.** Appareil de compression pour membrane gonflable selon l'une des revendications 1 à 5, dans lequel le dispositif à membrane gonflable comprend en outre un moyen de guidage tronconique pour guider la membrane gonflable pendant qu'elle est gonflée.

**7.** Appareil de compression pour membrane gonflable selon l'une des revendications 1 à 6, dans lequel le moyen de support est monté de façon à pouvoir coulisser dans le cadre de serrage.

**8.** Appareil de compression pour membrane gonflable selon l'une des revendications 1 à 7, dans lequel le moyen de support est un dispositif à membrane gonflable supplémentaire.

**9.** Appareil de compression pour membrane gonflable selon l'une des revendications 1 à 8, qui est un appareil de compression portable.

**10.** Procédé pour déposer un film ou un revêtement sur une surface d'un article à l'aide de l'appareil de compression pour membrane gonflable selon l'une quelconque des revendications 1 à 9, dans lequel la membrane gonflable est maintenue à une valeur de consigne de pression maximale pendant tout le temps du procédé avant de récupérer un article pourvu d'un revêtement.

**11.** Procédé selon la revendication 10, qui comporte une étape de chauffage et/ou de cuisson.

**12.** Procédé selon la revendication 10 ou 11, qui comporte l'application sur la surface de l'article d'un film ou d'un revêtement posé sur un substrat flexible.

**13.** Procédé pour déposer un film ou un revêtement sur une surface d'un article à l'aide de l'appareil de compression pour membrane gonflable selon l'une quelconque des revendications 1 à 9, comprenant :

- la mise en place d'un article dans le moyen de support, sa surface destinée à recevoir le revêtement étant tournée vers le haut ;
- le dépôt d'une certaine quantité d'une colle durcissable ou d'une solution de revêtement sur la surface de l'article destinée à recevoir le revêtement ;
- l'application sur la colle durcissable d'un film ou d'un revêtement posé sur un support flexible ;
- l'introduction dans l'appareil du moyen de support portant l'article et le film ou le revêtement posé sur un support flexible ;
- le gonflage de la membrane gonflable jusqu'à obtention d'une valeur de consigne de pression maximale ;
- le chauffage et/ou la cuisson de la colle durcissable ou de la solution de revêtement tout en conservant la valeur de consigne de pression maximale de la membrane gonflable ;
- la récupération de l'article, sa surface étant pourvue du film ou du revêtement.

**14.** Procédé pour déposer un film ou un revêtement posé sur un support flexible et comprenant une couche la plus externe constituée d'un latex sec sur une surface d'un article à l'aide de l'appareil de compression pour membrane gonflable selon l'une quelconque des revendications 1 à 9, comprenant :

- la mise en place d'un article dans le moyen de support, sa surface destinée à recevoir le revêtement étant tournée vers le haut ;
- le dépôt d'une certaine quantité d'eau ou d'un solvant aqueux sur la surface de l'article destinée à recevoir le revêtement ou sur la couche de latex sec la plus externe ;
- l'application sur la surface de l'article destinée à recevoir le revêtement du film ou du support flexible avec la couche la plus externe ;
- l'introduction dans l'appareil du moyen de support portant l'article et le film ou le support flexible ;
- le gonflage de la membrane gonflable jusqu'à obtention d'une valeur de consigne de pression maximale ;
- le chauffage et/ou la cuisson de la couche de latex tout en conservant la valeur de consigne de pression maximale de la membrane gonflable ; et
- la récupération de l'article, sa surface étant pourvue du film ou du revêtement.

**15.** Procédé selon l'une des revendications 10 à 14, l'article étant un article optique.

FIG.1

FIG.2

FIG.4

FIG.5

FIG.3

FIG.6A

FIG.6B

FIG. 6 C

Without pressure relief valve

With pressure relief valve

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3532710 A
- US 6562466 B
- EP 1426168 A
- US 4211823 A
- WO 9410230 A
- US 5015523 A
- EP 614957 A
- US 6503631 B

- JP 63141001 A
- JP 63087223 A
- EP 0404111 A
- US 5316791 A
- EP 1161512 A
- US 6770710 B
- US 6740699 B

**Non-patent literature cited in the description**

- **Owens D.K. ; Wendt R.G.** Estimation of the surface force energy of polymers. *J. Appl. Polym. Sci.,* 1969, 1741-1747

- **Sobieski et al.** Handbook of Pressure-Sensitive Adhesive Technology. Van Nostrand Reinhold, 1989, 508-517